# EUROPEAN PATENT APPLICATION

(11) **EP 3 819 173 A1**
(43) Date of publication of application: **12.05.2021**
(21) Application number: 19208244.4
(22) Date of filing: 11.11.2019
(51) Int. Cl.: B60R 22/48, A44B 11/25, B60Q 3/242

(54) **FASTENING BELT SYSTEM**

(71) Applicant: Ningbo Geely Automobile Research & Development Co. Ltd., Hangzhou Bay New District Ningbo 315336 (CN)
(72) Inventor: NILSSON, Magnus, 448 37 FLODA (SE); PIHLSGÅRD, Måns, 411 29 GÖTEBORG (SE); LINDBERG NILSSON, Erik, 417 47 GÖTEBORG (SE); HAGSTRÖM, Albin, 415 45 GÖTEBORG (SE)
(74) Representative: Zacco Sweden AB

(57) **Abstract**

A fastening belt system (1) for a vehicle comprises a first connector (2) arranged to be attached to a load transmitting member (8) and a second connector (3) arranged to be attached to a seat belt (4). The second connector (3) is releasably attachable to the first connector (2). The first connector (2) comprises a first structure (5) and the second connector (3) comprises a second structure (6). The first structure (5) and the second structure (6) are adapted such that they indicate to a user that the first connector (2) and the second connector (3) are a matching pair for a specific seat or place (7) in a vehicle.

## Description

### TECHNICAL FIELD

The present invention relates to a fastening belt system for a vehicle comprising a first connector arranged to be attached to a load transmitting member and a second connector arranged to be attached to a fastening belt, the second connector being releasably attachable to the first connector. The present invention also relates to a vehicle with such a fastening belt system.

### BACKGROUND

In most countries there is fastening belt legislation that requires the occupants of a vehicle to use fastening belts, e.g. seat belts. Initially, it was only mandatory for the driver and the passenger in a front seat to use the seat belts. Nowadays, it is mandatory to use seat belts for all passengers in a vehicle, at least in modern vehicles and in almost all countries.

In some vehicles there are three or even more seats in one row, especially in back seats. Even for the seat or seats in the middle, the use of three point belts are increasing. In a seat belt system a first connector is connected to a load transmitting member, most commonly a buckle connected to a wire or similar which in turn is attached to the vehicle body. A second connector, normally a tongue, is slidingly arranged on a belt and the tongue and the buckle are designed such that the tongue can be inserted in the buckle and thus fastened to one another. The buckle generally have a release mechanism for disconnecting the tongue and the buckle from one another for when the occupant wishes to leave the seat.

The safety systems of vehicles are being ever developed and there are now belt pretension systems, airbags etc. For these systems to function properly it is important that the seat belt with tongue and the buckle for the occupied seat is used.

### SUMMARY

It is an object of the present invention to provide a fastening belt system with a decreased risk of malfunction.

According to a first aspect of the present disclosure there is provided a fastening belt system for a vehicle that comprises a first connector arranged to be attached to a load transmitting member and a second connector arranged to be attached to a fastening belt wherein the second connector is releasably attachable to the first connector. The first connector comprises a first structure, the second connector comprises a second structure, and the first structure and the second structure are adapted such that they indicate to a user that the first connector and the second connector are a matching pair for a specific seat or place in a vehicle.

Having matching structures for the connectors for each seat or place facilitates for a user to identify the correct connectors for a specific seat or place.

According to another aspect of the present disclosure at least one of the first structure and the second structure comprises a signaling device arranged to transmit an identification signal. For instance, when a seat or place is occupied one of the structures belonging to that specific seat or place could transmit a light, sound, or a vibration signal to indicate for the occupant which connector to use for that seat or place.

According to a further aspect of the present disclosure the first structure comprises a first signaling device arranged to transmit a first identification signal, wherein the second structure comprises a second signaling device arranged to transmit a second identification signal and wherein the first and second identification signals are the same. An example is to have the structures fitted with lamps emitting light with the same color.

According to yet another aspect of the present disclosure at least one of the signaling devices comprises one or a combination of emitting devices chosen from the group of a light emitting device, a vibration emitting device, and a sound emitting device. As an example, before the connectors, usually a buckle and a tongue are connected they could emit a light with the same color and upon connection there could be sound emitted confirming the connection is correct.

According to yet a further aspect of the present disclosure at least one of the first structure and the second structure comprises a signaling device arranged to transmit a signal when a first connector of a first seat and a second connector of a second seat are connected, wherein the at least one signaling device comprises one or a combination of emitting devices chosen from the group of a light emitting device, a vibration emitting device, and a sound emitting device. For instance, if the connector tongue of one seat is connected to the connector buckle of a second seat are connected, the system could make the signaling devices to emit a vibration signal. Preferably, this "error" signal is emitted for as long as the erroneous connection is present.

According to yet a further aspect of the present disclosure at least one of the first structure and the second structure comprises a signaling device arranged to transmit a signal when a first connector is connected with a non-matching second connector, wherein the at least one signaling device comprises one or a combination of emitting devices chosen from the group of a light emitting device, a vibration emitting device, and a sound emitting device. For instance, if the connector tongue of a multi-point buckle fastening belt system or a multiple pairs fastening belt system is connected to a non-matching point of a multi-point buckle or to a non-matching buckle, the system could make the signaling devices to emit a vibration signal.

According to one aspect of the present disclosure at least one of the structures comprises a transmitting device arranged to transmit a connection status signal to a vehicle control system. For instance, if a seat or place is occupied the fastening belt system of that particular seat or place could transmit a signal that the connectors are attached to one another. Also, most vehicles have occupant sensors which indicate if someone is located at a specific seat or place. Further, if not properly connected or if the connector tongue of one seat is connected to the connector buckle of a second seat, the system could emit a signal such that this erroneous connection is displayed.

According to an aspect of the present disclosure at least one of the first and second structures is adapted for tactile detection. An example embodiment could be if the connector on the fastening belt is gripped by a user, the matching connector attached to the load transmitting device could be made to vibrate and/or emit a light if the level of light is low in order to facilitate finding the other connector.

According to yet an aspect of the present disclosure at least one of the first connector and the second connector comprises a signal receiving device. For instance, when a vehicle door is opened, the vehicle system could send out a signal such that it is received by the receiving device of a connector, wherein the structure of that connector is thereafter activated to emit a signal, for instance such that the connector tongues emit light to help locating them for a person entering the vehicle.

According to yet a further aspect of the present disclosure the system further comprises a controller for receiving a signal indicative of a user occupying a seat or place associated to the first and second connectors. This controller could for instance be connected to the vehicle control unit and confirm correct use of the fastening belt system or indicate incorrect use.

According to an aspect of the present disclosure the second connector further comprises a tactile sensor for sending a signal indicative of a user gripping the second connector.

According to a further aspect of the present disclosure the system is adapted to activate the signaling device of the first connector in response to the signal indicative of a user gripping the second connector.

According to yet a further aspect of the present disclosure the system comprises a third connector arranged to be attached to a further load transmitting member and a fourth connector arranged to be attached to a further fastening belt. The fourth connector is releasably attachable to the third connector, wherein the third connector comprises a third structure, wherein the fourth connector comprises a fourth structure. The third structure and the fourth structures are adapted for indicating to a user that the third connector and the fourth connector are a further matching pair for the same or a further specific seat or place in a vehicle. Thus, for one seat the structures are matched differently from the structures of another seat, or the structures of a first pair of connectors are matched differently from the structures of a second pair of connectors of the same seat or place.

According to an alternative aspect of the present disclosure the second connector comprises a battery. Preferably it is a rechargeable battery that is charged when connected with the first connector.

According to a further aspect of the present disclosure the first and second connectors are adapted for electrical connection when the second connector is attached to the first connector. Thus, the two connectors also have an electrical connection apart from the mechanical such that the battery in the second connector can be charged by being connected to the first connector. The first connector could either have its own battery or be connected to the electrical system of the vehicle. Additionally, the first connector could also be equipped with a battery and at the same time being connected to the electrical system of the vehicle.

According to still a further aspect of the present disclosure the fastening belt system may further comprise a multi-point buckle arranged to be attached to a load transmitting member and having multiple connection points for releasable connection with multiple corresponding connectors, wherein the first connector corresponds to one of said multiple connection points, and wherein the second connector corresponds to one of said multiple corresponding connectors. Thereby, a guide to correct assembly of a fastening belt system with a multi-point buckle is provided.

According to an aspect of the present disclosure, the fastening belt system is a seat belt system.

According to an aspect of the present disclosure a vehicle comprises a fastening belt system according to the above disclosure.

Further features of, and advantages with, the present invention will become apparent when studying the appended claims and the following description. The skilled person realize that different features of the present invention may be combined to create embodiments other than those described in the following, without departing from the scope of the present invention.

Hence, it is to be understood that the herein disclosed invention is not limited to the particular component parts of the device described since such device may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:
Figure 1 is a perspective view of connectors according to the present disclosure,
Figure 2 is a perspective view of car seat with three seats,
Figure 3a-3c shows a connector with different signal devices,
Figure 4 shows connectors with schematic electric couplings,
Figures 5a and 5b show a seat or fastening belt system for a two-point seat or fastening belt in closed and open states,
Figure 6 shows a fastening belt system having multiple pairs of matching connectors,
Figures 7a and 7b show a seat or fastening belt system for a five-point seat or fastening belt in closed and open states,
Figure 7c shows a magnification of a multi-point buckle of the fastening belt of figures 7a-7b, and
Figures 8a and 8b show a seat or fastening belt system for another type of five-point seat or fastening belt in closed and open states.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference character refer to like elements throughout the description.

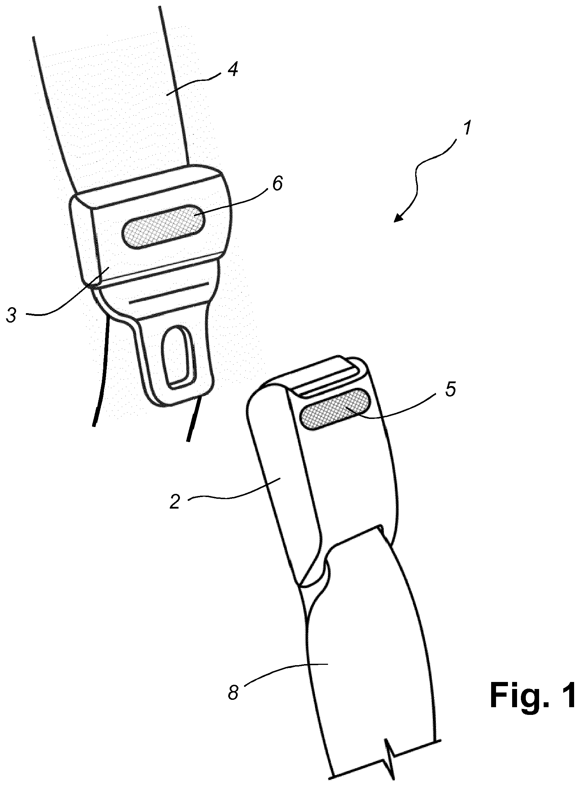

With reference to figure 1 a part of a fastening or seat belt system 1 for a vehicle is shown that comprises a first connector 2 attached to a load transmitting member 8 and a second connector 3 attached to a seat belt 4. The second connector 3 is releasably attachable to the first connector 2. The first connector 2 comprises a first structure 5 and the second connector 3 comprises a second structure 6. The first structure 5 and the second structure 6 are adapted such that they indicate or signal to a user that the first connector 2 and the second connector 3 are a matching pair for a specific seat or place in a vehicle. Thus, the structures 5, 6 of the connectors 2, 3 are distinguishable from the structures on connectors on adjacent seats.

Specifically, the first structure 5 and the second structure 6 are adapted such that they actively indicate or signal to a user that the first connector 2 and the second connector 3 are a matching pair for a specific seat in a vehicle at certain event, such as when a user sits down in the seat, or grabs the second connector 3, or enters the vehicle, or unlocks the vehicle.

Various sensors may be used for detecting such an event, such as for example seat occupancy sensor detecting seating of the user in the seat, proximity sensor detecting occupancy of the user in the seat, acceleration sensor detecting motion of the second connector 3, capacitive sensor detecting touching the second connector 3, etc.

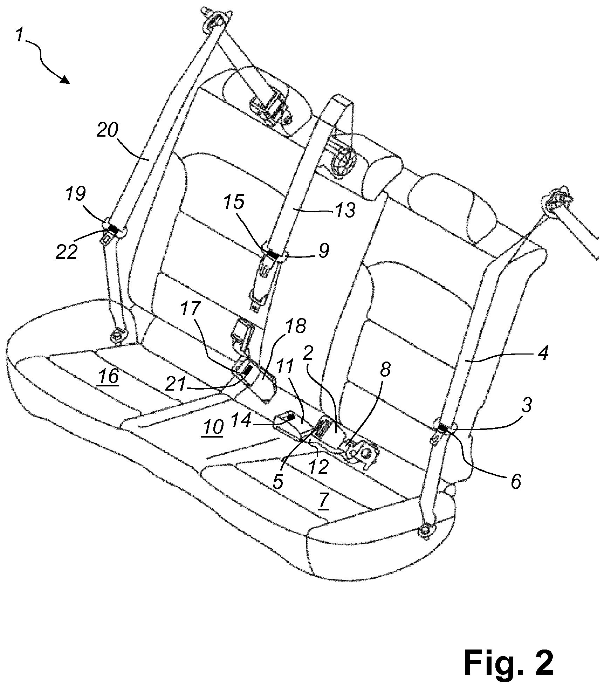

Turning to figure 2, there is shown a three-seat bench for a vehicle having a seat belt system 1, a first seat 7, a second seat 10 and a third seat 16. The seat belt system 1 comprises a first connector 2 attached to a load transmitting member 8 and a second connector 3 attached to a seat belt 4. The second connector 3 is releasably attachable to the first connector 2. The first connector 2 comprises a first structure 5 and the second connector 3 comprises a second structure 6. The first structure 5 and the second structure 6 are adapted such that they indicate to a user that the first connector 2 and the second connector 3 are a matching pair for a specific seat 7 in a vehicle.

For example, each of the first and second structures 5, 6 may include a light emitting device, such as a light emitting diode, and the light emitting devices may indicate to a user that the first and second connectors 2, 3 are a matching pair by emitting light. The light emitting devices of the first and second connectors 2, 3 may be configured for simultaneously emitting constant, stepwise or gradually changing or blinking light. The emitted light from the light emitting devices may have the same color or different colors.

The first structure 5 and the second structure 6 may each comprise a signaling device arranged to transmit an identification signal wherein the first and second identification signals are the same.

Further, the first structure 5 and the second structure 6 may comprise at least one signaling device arranged to transmit a warning signal when first connector 2 is connected with a connector or another seat, such as when the first connector 2 of the first seat 7 and the second connector 9 of a second seat 10 are connected. The signaling device comprises one or a combination of emitting devices chosen from the group of a light emitting device, a vibration emitting device, and a sound emitting device.

The system 1 also shows a third connector 11 attached to a further load transmitting member 12 and a fourth connector 9 attached to a further seat belt 13. The fourth connector 9 is releasably attachable to the third connector 11, wherein the third connector 11 comprises a third structure 14, wherein the fourth connector 9 comprises a fourth structure 15. The third structure 14 and the fourth structure 15 are adapted for indicating to a user that the third connector 11 and the fourth connector 9 are a further matching pair for a second seat 10.

In the shown embodiment there is a third seat 16 having a fifth connector 17 attached to a load transmitting member 18 and a sixth connector 19 attached to a seat belt 20. The sixth connector 19 is releasably attachable to the fifth connector 17, wherein the fifth connector comprises a fifth structure 21 and wherein the sixth connector 19 comprises a sixth structure 22. The fifth structure 21 and the sixth structure 22 are adapted for indicating to a user that the fifth connector 17 and the sixth connector 19 are a further matching pair for the third seat 16.

Thus, for the three seats 7, 10, 16 there are different matching pairs. For instance, in case the structures 5, 6, 14, 15, 21, 22 are light emitting devices, for each seat there is a specific color. In other words, the structures of the connectors of a specific seat are distinguishable from the structures on connectors on adjacent seats.

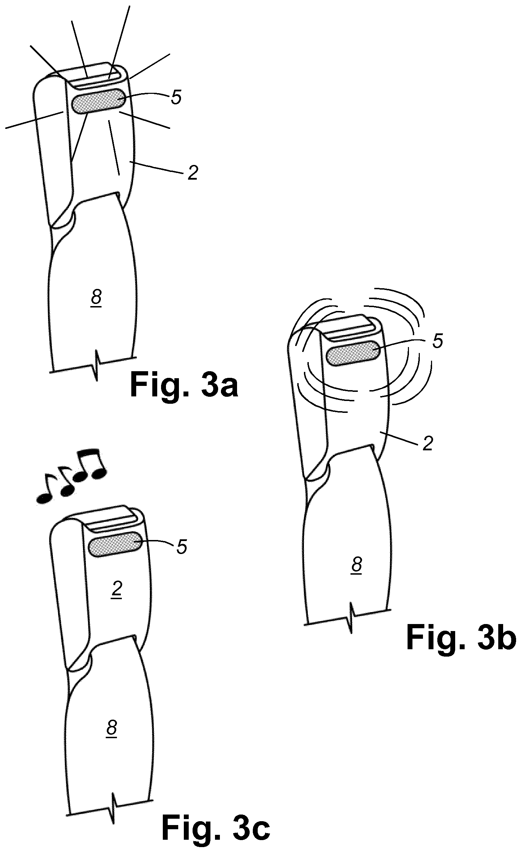

Figures 3a, 3b, and 3c show examples of signaling variations. In figure 3a the connector 2 has a structure 5 that emits light. The light emitted could be for instance various colors or it could be a blinking light.

In figure 3b, the connector 2 has a structure 5 that vibrates and in figure 3c, the structure 5 emits a sound.

Going back to figure 2, the structures 6, 15, 22 on the connectors 3, 9, 19 attached to the seat belts 4, 13, 20 are adapted for tactile detection and also for sending a signal indicative of a user gripping the connector. Also, the other matching connectors 2, 11, 17, comprise each a signal receiving device.

An example scenario is that someone enters the vehicle and sits on the first seat 7 gripping the second connector 3 attached to the seat belt 4 for the first seat 7. The tactile sensor in the second connector 3 registers the gripping and sends a signal to the first connector 2. Upon receiving this signal, the structure 5 in the first connector 2 starts vibrating in order to help the user identify the matching connector.

A further example scenario is that someone enters the vehicle and sits down on the first seat 7 and grips the second connector 3 attached to the seat belt 4 of the first seat 7. A seat sensor, proximity sensor or other type of user location sensor detects seating of the user in the first seat 7 and sends a signal to one, or both, of the first and second connectors 2, 3. Upon receiving this signal, the structure 5 in the first connector 2 and/or the structure 6 in the second connector 3 starts signaling, such as for example vibrating, lighting, blinking, ringing, etc. in order to help the user identify matching connectors 2, 3 for the first seat.

Still more alternatively, all matching connectors of a seat belt system of a seat bench having two or more neighboring seats may automatically start signaling matching connectors as soon a user approaches, unlocks, enters or sits down in any of the seats of the seat bench. For example, first and second connectors may light up with a first color, third and fourth connectors may light up with a second color, and fifth and sixth connectors may light up with a third color.

In case the user connects the second connector 3 that is attached to the seat belt 4 to a connector of another seat, in this case the second seat 10 is most likely and the corresponding third connector 11, either the structure of one of the second and third connectors 3, 11 or both could be made to emit a warning signal. This warning signal could preferably continue to be emitted for as long as the erroneous connection is present. The warning signal could be one or a combination of light, vibration, and sound.

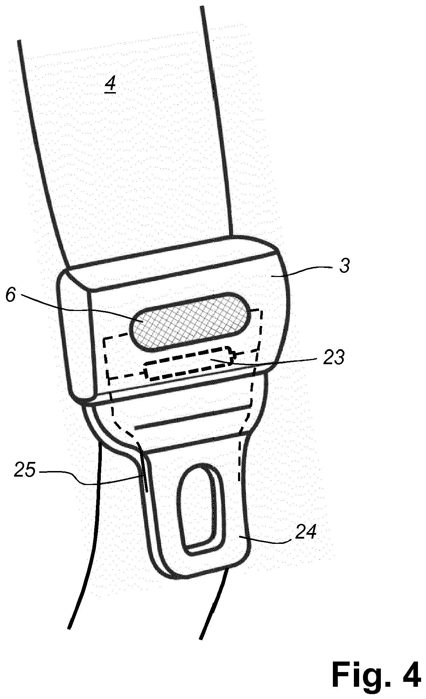

Turning to figure 4, the second connector 3 is shown comprising a battery 23. The battery 23 is in the shown case a rechargeable battery. When the tongue 24 of the connector 3 is inserted in the other connector 2, contact devices 25 establishes electrical contact with the other connector 2 such that the battery 23 is charged. The other connector 2 that is attached to the load transmitting member has electrical power supply from the vehicle.

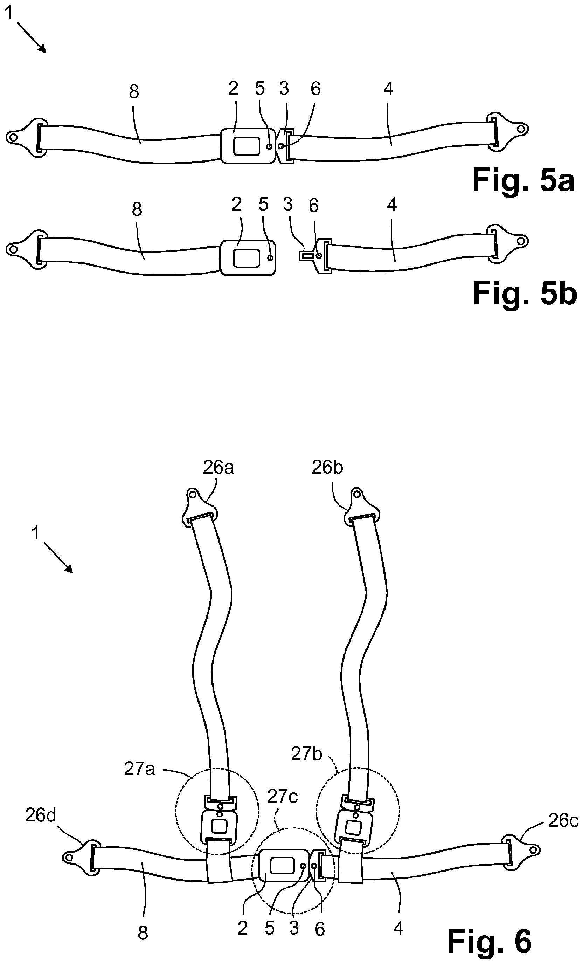

The specific example embodiment of the seat belt system described above with reference to figure 2 provides guidance to a user for selecting and connecting a matching pair of a first and second connectors 2, 3 of a three-point belt for a specific seat of the seat bench in a vehicle, and thus avoiding connecting for example a connector from a first seat 7 of the seat bench with a connector from a second seat of the seat bench, i.e. a non-matching pair of connectors. However, the seat belt system according to the disclosure is also advantageous for seat belt systems having for example a two-point belt, as schematically illustrated in figures 5a and 5b.

A two-point belt system, also sometimes referred to as a vehicle waist seat belt, as illustrated in a closed state in figure 5a and an open state in figure 5b, comprises a first connector 2 arranged to be attached to a load transmitting member 8 and a second connector 3 arranged to be attached to a seat belt 4. The load transmitting member 8 may be a seat belt. The second connector 3 is releasably attachable to the first connector 2, the first connector 2 comprises a first structure 5, the second connector 3 comprises a second structure 6, and the first structure 5 and the second structure 6 are adapted such that they indicate to a user that the first connector 2 and the second connector 3 are a matching pair for a specific seat 7 in a vehicle.

As before, the first and second structures 5, 6 may be light emitting devices, vibration emitting devices and/or sound emitting devices, or the like.

A seat bench having two, three or more neighboring seats with two-point seat belts and with the seat belt system according to the disclosure would provide greatly simplified and more safe usage of the seat belt for a user, because the user would benefit from the guidance provided by the first and second structures 5, 6 adapted to indicate to the user that a first and second connectors 2, 3 are indeed a matching pair for a specific seat 7 in a vehicle.

The seat belt system according to the disclosure is also beneficial for providing guidance to a user when connecting a seat belt of a single seat, such as for example a front or rear seat, having a multiple matching pairs of connectors, as schematically illustrated in the example embodiment of figure 6.

The seat belt according to the example embodiment of figure 6 is a four-point belt, i.e. being configured for being attached to a vehicle body at four attachment points 26a, 26b, 26c, 26d, and includes three separate matching pairs 27a, 27b, 27c of connectors, as illustrated by dotted circles.

The connectors of any one of said pairs 27a-27c may be deemed corresponding to the first connector 2 arranged to be attached to a load transmitting member 8 and a second connector 3 arranged to be attached to a seat belt 4, wherein the second connector 3 being releasably attachable to the first connector 2, wherein the first connector 2 comprises a first structure 5, wherein the second connector 3 comprises a second structure 6, and wherein the first structure 5 and the second structure 6 are adapted such that they indicate to a user that the first connector 2 and the second connector 3 are a matching pair for a specific seat 7 in a vehicle.

Consequently, a user may be guided upon fastening the seat belt, by the first and second structures 5, 6, of one or each pair 27a-27c of matching connectors, identifying which connectors form matching pairs. For example, each of the two matching connectors of a first pair 27a may emit light with a first color or pattern, each of the two matching connectors of a second pair 27b may emit light with a second color or pattern, and each of the two matching connectors of a third pair 27c may emit light with a third color or pattern.

Moreover, as described above with reference to figure 2, if the user by mistake happen to connect connectors not forming a matching pair, a warning signal may be emitted.

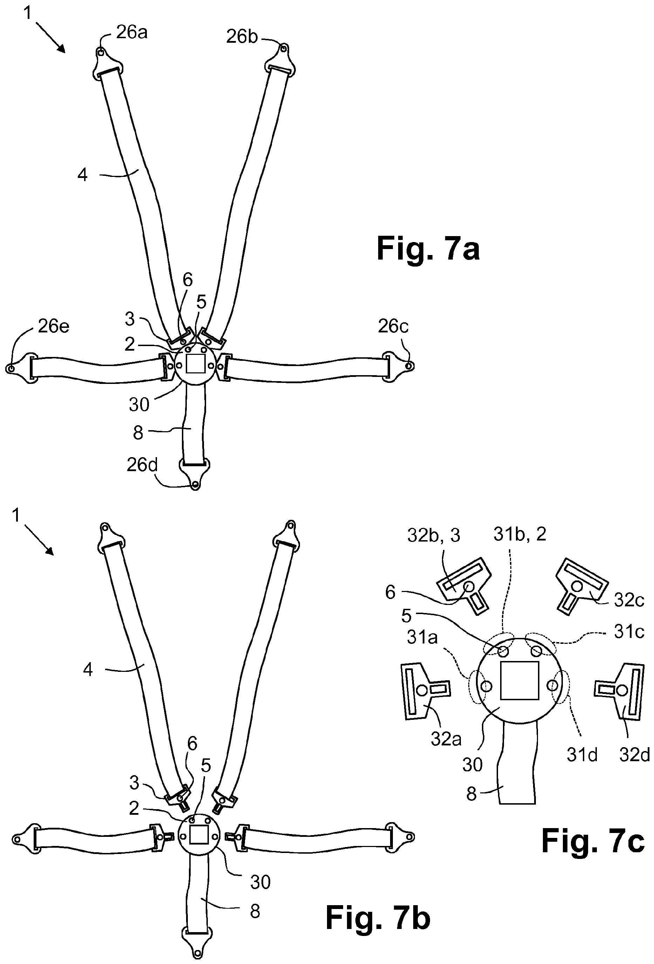

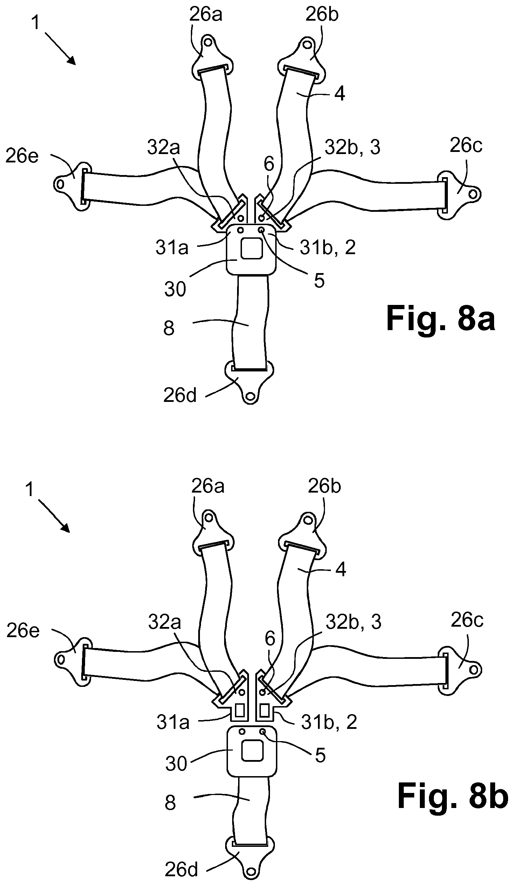

The seat belt system according to the disclosure is also beneficial for providing guidance to a user when connecting a seat belt of a single seat, such as front seat or a rear seat, having a multi-point buckle having multiple connection points for releasable connection with multiple corresponding connectors. Example embodiments of seat belts having such a multi-point buckle are schematically illustrated in figures 7a - 7c and 8a - 8b.

Figure 7a shows the seat belt system in a closed state, figure 7b shows the seat belt system in an opened state, and figure 7c shows a magnified view of the multi-point buckle 30 with the multiple connection points 31a, 31b, 31c, 31d and multiple corresponding connectors 32a, 32b, 32c, 32d in a released state.

The multi-point buckle 30 is arranged to be attached to a load transmitting member 8 and having multiple connection points 31a, 31b, 31c, 31d for releasable connection with multiple corresponding connectors 32a, 32b, 32c, 32d, wherein the first connector 2 corresponds to one of said multiple connection points 31a, 31b, 31c, 31d, and wherein the second connector 3 corresponds to one of said multiple corresponding connectors 32a, 32b, 32c, 32d.

The seat belt system corresponds to a five point belt because it is configured for being attached to a vehicle body at five attachment points 26a, 26b, 26c, 26d, 26e. In the example embodiment of figures 5a - 5c the multi-point buckle 30 has four connection points 31a, 31b, 31c, 31d.

The four connection points 31a, 31b, 31c, 31d and four corresponding connectors 32a, 32b, 32c, 32d jointly define four matching pairs.

Each of the four connection points 31a, 31b, 31c, 31d has a first structure 5 and each of the four corresponding connectors 32a, 32b, 32c, 32d has a second structure 6, and the first structure 5 and the second structure 6 of each pair are adapted such that they indicate to a user that the first connector 2 and the second connector 3 are a matching pair. As a result, a user is guided to attach each corresponding connector 32a, 32b, 32c, 32d to the correct connection point 31a, 31b, 31c, 31d of the multi-point buckle 30.

This may for example be performed by providing each of the first and second structures 5, 6 of each pair with a light emitting device of a unique color or pattern. Hence, when a user fastens the seat belt or grabs for example second connector 3 the first and second light emitting devices 5, 6 emits light with corresponding effect, such as with the same color, same type of blinking pattern, or the like.

Consequently, the risk that a user inserts the second connector 3 in a wrong connection point 31a, 31c, 31d of the multi-point buckle 30 is reduced.

Figures 8a - 8b show still a further example embodiment of the seat belt system 1 according to the disclosure, wherein figure 8a shows the seat belt system in a closed state and figure 8b shows the seat belt system in an opened state.

The seat belt system corresponds to a five-point belt because it is configured for being attached to a vehicle body at five attachment points 26a, 26b, 26c, 26d, 26e. However, in the example embodiment of figures 8a - 8b the multi-point buckle 30 has only two connection points 31a, 31b.

The two connection points 31a, 31b and two corresponding connectors 32a, 32b, jointly define two matching pairs.

The multi-point buckle 30 is arranged to be attached to a load transmitting member 8 and having multiple connection points 31a, 31b for releasable connection with multiple corresponding connectors 32a, 32b, wherein the first connector 2 corresponds to one of said multiple connection points 31a, 31b, and wherein the second connector 3 corresponds to one of said multiple corresponding connectors 32a, 32b.

The first connector, which here corresponds to for example connection point 31b, has a first structure 5, and the second connector, which here corresponds to corresponding connector 32b, has a second structure 6, and the first structure 5 and the second structure 6 are adapted such that they indicate to a user that the first connector 2 and the second connector 3 are a matching pair. As a result, a user is guided to attach the corresponding connector 32b to the correct connection point 31b of the multi-point buckle 30, such that the risk that a user inserts the second connector 3 in a wrong connection point 31a of the multi-point buckle 30 is reduced.

In the seat belt system according to the example embodiments of figures 5a-5b, 6 and 7a-7c, in which the second connector 3 does not slide along the seat belt 4, unless for length adjustment of the seat belt, the second connector 3 may possibly operate without battery 23, because electrical power may instead be provided from the vehicle via electrical cables attached to the seat belt 4.

The fastening belt system according to the disclosure may be applied as a seat belt system as described above, but also for other type of fastening belt applications where there is a risk for incorrect matching of fastening belt connectors. For example, a fastening belt system according to the disclosure having multiple pairs of matching connectors or a multi-points buckle may advantageously be used for securing a user lying in a vehicle bed against harmful movement in the event of vehicle collision or the like, or for securing a person seated in a wheel-chair to a particular place within the vehicle, or the like, while avoiding connection of non-matching pairs of connectors.

It is to be understood that the present invention is not limited to the embodiments described above and illustrated in the drawings; rather, the skilled person will recognize that many changes and modifications may be made within the scope of the appended claims. For example, instead of electrical connection between the connectors for supplying electric power, each of the connectors could have its own battery for supplying the structures with power.

## Claims

1. A fastening belt system (1) for a vehicle comprising a first connector (2) arranged to be attached to a load transmitting member (8) and a second connector (3) arranged to be attached to a fastening belt (4), the second connector (3) being releasably attachable to the first connector (2), **characterized in**
**that** the first connector (2) comprises a first structure (5), that the second connector (3) comprises a second structure (6), and that the first structure (5) and the second structure (6) are adapted such that they indicate to a user that the first connector (2) and the second connector (3) are a matching pair for a specific seat or place (7) in a vehicle.

2. The fastening belt system (1) according to claim 1, wherein at least one of the first structure (5) and the second structure (6) comprises a signaling device arranged to transmit an identification signal.

3. The fastening belt system (1) according to claim 2, wherein the first structure (5) comprises a first signaling device arranged to transmit a first identification signal, wherein the second structure (6) comprises a second signaling device arranged to transmit a second identification signal and wherein the first and second identification signals are the same.

4. The fastening belt system (1) according to any of the claims 2 and 3, wherein at least one of the signaling devices comprises one or a combination of emitting devices chosen from the group of a light emitting device, a vibration emitting device, and a sound emitting device.

5. The fastening belt system (1) according to claim 2, wherein at least one of the first structure (5) and the second structure (6) comprises a signaling device arranged to transmit a warning signal when a first connector (2) of a first seat (7) and a second connector (9) of a second seat (10) are connected, wherein the at least one signaling device comprises one or a combination of emitting devices chosen from the group of a light emitting device, a vibration emitting device, and a sound emitting device.

6. The fastening belt system (1) according to any one of the preceding claims, wherein at least one of the structures (5, 6) comprises a transmitting device arranged to transmit a connection status signal to a vehicle control system.

7. The fastening belt system (1) according to any of the preceding claims, wherein at least one of the first and second structures (5, 6) is adapted for tactile detection.

8. The fastening belt system (1) according to any of the preceding claims, wherein at least one of the first connector (2) and the second connector (3) comprises a signal receiving device.

9. The fastening belt system (1) according to any of the preceding claims, wherein the system further comprises a controller for receiving a signal indicative of a user occupying a seat or place associated to the first and second connectors (2, 3).

10. The fastening belt system (1) according to any of the claims 2-4, 6 and 9, wherein the system is adapted to activate the signaling device of the first connector (2) in response to the signal indicative of a user gripping the second connector (3).

11. The fastening belt system (1) according to any of the preceding claims, wherein the system comprises a third connector (11) arranged to be attached to a further load transmitting member (12) and a fourth connector (9) arranged to be attached to a further fastening belt (13), wherein the fourth connector (9) is releasably attachable to the third connector (11), wherein the third connector (11) comprises a third structure (14), wherein the fourth connector (9) comprises a fourth structure (15), and wherein the third structure (14) and the fourth structure (15) are adapted for indicating to a user that the third connector (11) and the fourth connector (9) are a further matching pair for the same or a further specific seat or place (10) in a vehicle.

12. The fastening belt system (1) according to any of the preceding claims, wherein the second connector (3) comprises a battery (23).

13. The fastening belt system (1) according to claim 12, wherein the first and second connectors (2, 3) are adapted for electrical connection when the second connector (3) is attached to the first connector (2).

14. The fastening belt system (1) according to any of the preceding claims, further comprising a multi-point buckle (30) arranged to be attached to a load transmitting member (8) and having multiple connection points (31a, 31b, 31c, 31d) for releasable connection with multiple corresponding connectors (32a, 32b, 32c, 32d), wherein the first connector (2) corresponds to one of said multiple connection points (31a, 31b, 31c, 31d), and wherein the second connector (3) corresponds to one of said multiple corresponding connectors (32a, 32b, 32c, 32d).

15. A vehicle comprising a fastening belt system (1) according to any of the preceding claims.
